# EUROPÄISCHE PATENTSCHRIFT

(11) **EP 2 673 521 B1**
(45) Veröffentlichungstag und Bekanntmachung des Hinweises auf die Patenterteilung: **08.04.2015**
(21) Anmeldenummer: 13709056.9
(22) Anmeldetag: 15.02.2013
(51) Int. Cl.: F16D 47/06, F16D 27/112

(54) **KOMBINIERTE REIBSCHEIBEN- UND FLÜSSIGKEITSREIBUNGSKUPPLUNG**
COMBINED FRICTION DISC/LIQUID FRICTION COUPLING
EMBRAYAGE À FRICTION ASSOCIANT UN DISQUE DE FRICTION ET UN FROTTEMENT VISQUEUX

(30) Priorität: 12.03.2012 DE 102012102058
(43) Veröffentlichungstag der Anmeldung: 18.12.2013
(62) Teilanmeldung aus: 13189819.9
(73) Patentinhaber: Kendrion (Markdorf) GmbH, 88677 Markdorf (DE)
(72) Erfinder: TILLY, Christian, 88690 Uhldingen-Mühlhofen (DE); BUSCH, Matthias, 88709 Meersburg (DE)
(74) Vertreter: Wagner, Kilian
(86) Internationale Anmeldenummer: PCT/EP2013/053128
(87) Internationale Veröffentlichungsnummer: WO 2013/135457

(56) Entgegenhaltungen:
- DE-A1- 10 232 138
- JP-A- H01 145 433

## Beschreibung

Die Erfindung betrifft eine Kupplungsanordnung gemäß dem Oberbegriff des Anspruchs 1 zum Übertragen eines Antriebsmomentes auf ein Nebenaggregat, insbesondere ein Lüfterrad, eines Kraftfahrzeugs.

Grundsätzlich bekannt sind ein- oder mehrstufige Reibscheibenkupplungen zum Antreiben von Nebenaggregaten, wie Lüfterrädern. Solche, beispielsweise als elektromagnetisch betätigbare Kupplungen ausgebildete Reibscheibenkupplungen sind beispielsweise in der EP 0 317 703 A2, der DE 32 031 43 C2 oder DE 42 07 10 C2 beschrieben. Bezüglich des grundsätzlichen Aufbaus, der Wirkungsweise sowie des Einsatzgebietes derartiger Reibscheibenkupplungen wird auf diese Veröffentlichungen verwiesen. Anstelle von Kupplungen mit einem elektromagnetischen Schaltmechanismus werden im Stand der Technik pneumatisch oder hydraulisch betätigten Reibscheibenkupplungen eingesetzt.

Zum Erzeugen eines drehzahlabhängigen Schleppmomentes ohne variable Drehzahleinstellung ist es bekannt, elektromagnetische Kupplungsanordnungen mit einem Wirbelstrommechanismus zu versehen. Aufgrund der benötigten starken Magnetkräfte kommen zwangsläufig teure Permanentmagneten zum Einsatz, woraus Kostennachteile der bekannten Technologie resultieren.

Anstelle der zuvor beschriebenen Reibscheibenkupplungen werden zum Antreiben von Nebenaggregaten von Kraftfahrzeugen auch so genannte Flüssigkeitsreibungskupplungen, auch Visko-Kupplungen oder Viskositätskupplungen genannt, eingesetzt. Bei Visko-Kupplungen wird eine Drehzahl von einer Primärseite auf ein Fluid übertragen und von diesem dann auf eine Sekundärseite der Kupplung.

Hinsichtlich eines grundsätzlichen Aufbaus von Fluidreibungskupplungen wird auf die US 4,305,491 sowie die EP 1 248 007 B1 verwiesen. Im Gegensatz zu einstufigen Reibscheibenkupplungen haben Flüssigkeitsreibungskupplungen ein vergleichsweise träges Ansprechverhalten und sind mit hohen Schlupfwerten behaftet.

Aus der DE 102 32 138 A1 ist es bekannt, zwei unterschiedliche Kupplungen in einem Antriebsstrang zum Antreiben einer Kühlmittelpumpe in einem Kraftfahrzeug einzusetzen. Neben einer Flüssigkeitsreibungskupplung ist bei der bekannten Vorrichtung zum Antrieb einer Kühlmittelpumpe in dem selben Antriebsstrang eine elektromagnetische Schaltkupplung vorgesehen, die parallel zur Flüssigkeitsreibungskupplung betrieben werden kann, um eine erhöhte Redundanz und eine Drehzahlregelung in zwei Stufen zu realisieren.

Aus der DE 31 48 014 A1 ist eine Kupplungsanordnung zum Antreiben eines Kühlgebläses einer Brennkraftmaschine bekannt, wobei auch hier zwei separate Kupplungen in einem Antriebsstrang vorgesehen sind, nämlich eine Visko-Kupplung mit Freilauf sowie eine elektromagnetische Kupplung.

Die vorerwähnte Kombination der Visko-Kupplungstechnologie und der Reibscheibenkupplungstechnologie in einem gemeinsamen Antriebsstrang kann erhebliche Vorteile mit sich bringen. Nachteilig ist jedoch der erhöhte Kostenaufwand aufgrund der Notwendigkeit des Vorsehens zweier separater Kupplungen. Darüber hinaus ist der konstruktive Aufwand erheblich und es wird ein vergleichsweise großer Bauraum benötigt.

Aus der JP H01 145 433 A ist eine Kupplungsanordnung mit mehreren Reibscheiben bekannt, wobei die Druckschrift offenbart, dass selbst bei nicht bestromter Elektromagnetanordnung der Abtrieb aufgrund der Viskosität des zwischen den Reibscheiben aufgenommenen Öls angetrieben wird.

Ausgehend von dem vorgenannten Stand der Technik liegt der Erfindung die Aufgabe zugrunde, den Bauraum bei einer Kombination der Visko-Kupplungstechnologie und der Reibscheibenkupplungstechnologie sowie den konstruktiven Aufbau zu minimieren. Bevorzugt soll auf einen kostenintensiven Wirbelstrommechanismus verzichtet werden können.

Diese Aufgabe wird mit einer Kupplungsanordnung mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, den vergleichsweise kostengünstigen über ein Steuerventil steuerbaren oder ungesteuerten Visko-Drehmomentübertragungsmechanismus vollständig in ein elektromagnetisches Reibscheibenkupplungskonzept zu integrieren. Anders ausgedrückt liegt der Erfindung der Gedanke zugrunde, die Reibscheibenkupplungsmittel und die Flüssigkeitsreibungskupplungsmittel als Teil einer gemeinsamen Kupplung zu realisieren, die als kombinierte Reibscheiben- und Flüssigkeitsreibungskupplung ausgebildet ist, wobei erfindungsgemäß der durch Bestromen der bestrombaren Wicklung verstellbare, insbesondere als Ankerscheibe ausgebildete Anker den Scherspalt begrenzt. Noch anders ausdrückt dient der Anker der Elektromagnetkupplung gleichzeitig als Primärscheibe der Viskokupplung. Dem Anker kommt somit eine Doppelfunktion zu. So kann über diesen bei entsprechender Bestromung der bestrombaren Wicklung durch Reibschluss mit dem Abtrieb das volle Drehmoment von der Antriebswelle auf den Antrieb übertragen werden. Bei nicht-Reibschluss begrenzt der Anker, vorzugsweise zusammen mit dem Abtrieb, mindestens einen mit Fluid, insbesondere Öl, gefüllten Scherspalt, hat also die Funktion eines Rotors einer Fluidreibungskupplung und überträgt so über Scherung des Fluids im Spalt ein Schleppmoment auf den Abtrieb. Bevorzugt ist der, noch weiter bevorzugt als Ankerscheibe ausgebildete Anker drehfest an der Antriebswelle fixiert.

Besonders bevorzugt - jedoch nicht zwingend - wird bei einer derartigen Kupplungsanordnung bewusst auf einen kostenintensiven Wirbelstrommechanismus verzichtet. Durch die vollständige Integration der beiden Drehmomentübertragungstechnologien in einer gemeinsamen Kupplung wird der benötigte Bauraum auf ein Minimum reduziert, ebenso wie der Gesamtkonstruktionsaufwand. Darüber hinaus können, beispielsweise aufgrund des Vorsehens eines gemeinsamen Gehäuses, Material- und Montagekosten im Vergleich zum Vorsehen von zwei getrennten, unterschiedlichen Kupplungen minimiert werden. Wie eingangs bereits angedeutet, ist es besonders zweckmäßig, wenn der mindestens eine Scherspalt bei nicht an dem Antrieb anliegendem Anker, d.h. bei nicht durchgeschalteten Reibscheibenkupplungsmitteln zwischen dem Anker und dem Abtrieb gebildet ist, wobei es besonders bevorzugt ist, wenn der Scherspalt, zumindest abschnittsweise, vorzugsweise vollständig, zwischen der mindestens einen Reibfläche des Ankers und der mindestens einen, vorzugsweise axial gegenüberliegenden, Reibfläche des Abtriebs gebildet ist.

Erfindungsgemäß ist zusätzlich zu dem von dem Anker begrenzten Scherspalt ein nicht von dem durch Bestromen der bestrombaren Wicklung verstellbaren Anker begrenzter Scherspalt (Konstant-Scherspalt), insbesondere auf einer von der Reibfläche des Ankers abgewandten Seite vorgesehen. Der mindestens eine nicht von dem Anker begrenzte Scherspalt zeichnet sich bevorzugt durch eine konstante, d.h. nicht durch Verstellen des Ankers veränderbare Spaltbreite aus. Bevorzugt ist zur Begrenzung des vorgenannten Konstant-Scherspaltes antriebsseitig, insbesondere an der Antriebswelle eine vergleichsweise starre Scheibe festgelegt, die bevorzugt mit der von dem Anker abgewandten Flächenseite den Konstant-Scherspalt begrenzt, welcher gegenüberliegend abtriebsseitig begrenzt ist, insbesondere von einem Gehäuseteil. Ganz besonders bevorzugt ist es, wenn der Konstant-Scherspalt und der von dem Anker begrenzte Scherspalt fluidleitend verbunden sind, was insbesondere dadurch in vorteilhafter Weise erreicht werden kann, dass der Konstant-Scherspalt und der von dem Anker begrenzte Scherspalt in einem gemeinsamen Arbeitsraum angeordnet sind. Bevorzugt sind eine vorerwähnte starre Scheibe zur Begrenzung des Konstant-Scherspaltes und der bevorzugt axial verstellbare Anker gemeinsam in diesem Arbeitsraum vorgesehen.

Ganz besonders zweckmäßig ist es, wenn das, vorzugsweise als Öl, noch weiter bevorzugt als Silikonöl ausgebildete Fluid zur Übertragung des Drehmomentes im Scherspalt eine Viskosität aus einem Wertebereich zwischen 500 und 30.000 cst aufweist.

Da die Reibung zwischen der mindestens einen Reibfläche des Ankers und der mindestens einen Reibfläche des Abtriebs aufgrund des Fluids, insbesondere des Viskoseöls im Scherspalt im Vergleich zu einer reinen Reibscheibenkupplungslösung reduziert ist, ist es besonders bevorzugt, wenn die Geometrie des Ankers und des Abtriebs so gewählt ist, dass vergleichsweise große Reibflächen resultieren, um das maximale übertragbare Drehmoment bei Reibschluss zu erhöhen. Hierzu ist es besonders zweckmäßig, wenn die Reibfläche des Ankers und die korrespondierende Reibfläche des Abtriebs winklig zur Radialerstreckung des Ankers, d.h. winklig zu einer Senkrechten der Antriebswelle, verlaufen, wobei es besonders zweckmäßig ist, wenn der Anker und der Abtrieb bzw. deren Reibflächen, zumindest abschnittsweise, konisch konturiert sind, um die Kontaktflächen (Reibflächen) zu erhöhen.

Gleichzeitig wird durch diese Maßnahme die Größe der Scherfläche(n) erhöht, woraus ein erhöhtes Schleppmoment resultiert.

Ganz besonders zweckmäßig ist es, wenn an Anker und Abtrieb jeweils nicht nur eine Reibfläche vorgesehen ist, sondern wenn jeweils mindestens zwei Reibflächen vorgesehen sind, die noch weiter bevorzugt in radialer Richtung voneinander beabstandet sind. Besonders zweckmäßig ist es, wenn zwei konisch konturierte Reibflächenpaare zwischen Anker und Abtrieb realisiert sind, wobei bevorzugt zwei Reibflächen des Abtriebs über eine magnetische Trennung, beispielsweise aus Bronze voneinander beabstandet sind, um den magnetischen Fluss über den fluidgefüllten Luftspalt zwischen Abtrieb und Anker zu zwingen. Besonders vorteilhaft hat es sich erwiesen, wenn der Anker mindestens zwei jeweils eine, noch weiter bevorzugt konisch konturierte Reibfläche tragende Polstücke aufweist.

Besonders zweckmäßig ist es, wenn ein auf der von der bestrombaren Wicklung abgewandten Seite vorgesehener Spalt zwischen dem Anker und einem weiteren Kupplungsbauteil, insbesondere einem, bevorzugt drehfest mit dem Abtrieb verbundenen, Kupplungsgehäuse, als gerader Axialspalt ausgebildet ist und/oder eine geringere Flächenerstreckung aufweist als der mindestens eine Scherspalt, vorzugsweise als sämtliche Scherspalte, und/oder eine mittlere Spaltbreite aufweist, die größer ist als die mittlere Spaltbreite sämtlicher Scherspalte.

Gemäß einer ganz besonders bevorzugten Ausführungsform ist die vorerwähnte starre, d.h. nicht als Federscheibe ausgebildete Scheibe gleichzeitig eine Trägerscheibe für eine Rückstellfeder des Ankers. Bei einer alternativen Ausführungsform ist der Anker, d.h. die Ankerscheibe über eine Rückstellfeder unmittelbar mit der Welle verbunden, wobei zusätzlich dann die starre mit der Welle drehfest verbundene Scheibe vorgesehen ist, die dann in erster Linie nur die Funktion hat den Konstant-Scherspalt zu begrenzen.

Besonders bevorzugt ist es, wenn der zusätzlich zu dem Scherspalt zwischen den Reibflächen vorgesehene Konstant-Scherspalt oder die dort vorgesehenen Konstant-Scherspalte, bevorzugt als Hauptscherspalt bzw. Hauptscherspalte ausgebildet ist/sind, derart, dass dieser bzw. diese ein Hauptschleppmoment übertragen. Anders ausgedrückt ist der mindestens eine von den Reibflächen abgewandte und/oder der mindestens eine radial benachbart zu den Reibflächen angeordnete Konstant-Scherspalt oder ein nicht von den gegenüberliegenden Reibflächen begrenzter variabler Scherspalt derart dimensioniert, dass mit diesem ein größeres maximales Schleppmoment übertragbar ist als mit dem von den Reibflächen begrenzten variablen Scherspalt. Dies ist bevorzugt dadurch realisiert, dass der vorgenannte Konstant-Scherspalt eine größere Flächenerstreckung, d.h. eine größere Scherfläche aufweist. Hierzu ist der mindestens eine Konstant-Scherspalt bevorzugt als sogenanntes Spaltlabyrinth ausgeführt, welches sich durch eine mehrfach wechselnde Richtung des Scherspaltes auszeichnet. Bevorzugt verläuft der Konstant-Scherspalt abwechselnd in axiale und radiale Richtung, d.h. es wechseln sich axiale und radiale Scherflächenpaare ab. Hierzu greifen das den Konstant-Scherspalt antriebsseitig begrenzende Bauteil, insbesondere eine an der Antriebswelle festgelegte Scheibe und ein Bauteil des Abtriebs, insbesondere ein Gehäusebauteil, bevorzugt in axialer Richtung, verzahnungsartig ineinander, wobei die Verzahnungskontur ganz besonders bevorzugt, jedoch nicht zwingend, im Wesentlichen rechteckig ausgebildet sein kann.

Durch das Vorsehen mindestens eines Konstant-Scherspaltes auf einer von der Reibfläche des Ankers abgewandten Seite kann das maximale Schleppmoment deutlich erhöht werden.

Es ist auch eine Ausführungsform denkbar, bei welcher der von dem Anker begrenzte Scherspalt als Labyrinthspalt ausgebildet ist. In diesem Fall greifen Anker und Polscheibenteil verzahnungsartig axial ineinander.

Kombiniert werden kann diese Ausführungsform mit einer zumindest abschnittsweise konischen Ausgestaltung des Ankers und des Polflächenteils. Die Ausführungsform mit Labyrinth-Scherspalt zwischen Anker und Polflächenteil kann mit oder ohne Konstant-Scherspalt realisiert werden. Die Ausführungsform zeichnet sich dadurch aus, dass der vorzugsweise als Labyrinth ausgebildete Scherspalt, insbesondere in konischer Ausführung, gleichzeitig die Reibfläche des Ankers und des Abtriebs bildet.

Besonders interessant ist eine derartige Ausführungsform, wenn, wie später noch erläutert werden wird, die Viskosekupplungsmittel (Flüssigkeitsreibungskupplungsmittel) variabel bzw. einstellbar ausgebildet sind, um den Füllstand des Fluids, insbesondere eines Viskoöls, in dem von dem Anker begrenzten Scherspalt und dem mindestens einen Konstant-Scherspalt, vorzugsweise in sämtlichen Scherspalten einstellen zu können, wobei der Mechanismus zur Steuerung des Fluidstroms in dem Viskokupplungsteil eine Bi-Metallanordnung umfassen kann oder alternativ Elektromagnetmittel jeweils zur Betätigung eines Fluidventils (Steuerventils) im Fluidstromkreislauf der Viskokupplung.

Um die Reibungsverhältnisse zwischen Anker und Abtrieb im durchgeschalteten Zustand der Reibscheibenkupplungsmittel zu optimieren, ist es besonders bevorzugt, wenn die Reibfläche des Ankers und/oder die Reibfläche des Abtriebs von einer die Haftreibung erhöhenden Beschichtung, insbesondere einer organischen Beschichtung, gebildet sind/ist.

Herkömmliche reine Reibscheibenkupplungen sind mangels Fluid nicht fluiddicht ausgebildet. Die hier vorgeschlagene kombinierte Kupplung weist vorzugsweise einen fluiddichten, den Anker aufnehmenden Arbeitsraum auf, wobei weiter bevorzugt zur Abdichtung dieses Arbeitsraums mindestens eine Elastomerdichtung, vorzugsweise eine O-Ringdichtung, vorgesehen ist, die noch weiter bevorzugt radial und/oder axial zwischen einem abtriebsseitigen, die elektromagnetseitigen Reibflächen bildenden oder tragenden Bauteil und einem den Arbeitsraum begrenzenden abtriebsseitigen Gehäuseteil angeordnet ist.

Ganz besonders bevorzugt ist eine Ausführungsform, bei der Mittel zur Einstellung unterschiedlicher Scherspaltbreiten vorgesehen sind. Anders ausgedrückt ist der mittlere Scherspalt einstell- und haltbar, um das Schleppmoment, welches zwischen Anker und Abtrieb übertragen wird, einstellen bzw. variieren zu können. Das Schleppmoment steigt mit geringer werdendem Spalt. Bevorzugt sind unterschiedliche Spaltbreiten in einem Wertebereich zwischen etwa 1/10 mm und etwa 8/10 mm einstellbar und können nach Einstellung, z. B. durch eine entsprechende Bestromung der Wicklung gehalten werden.

Eine Möglichkeit zur Einstellung der Scherspaltbreite kann durch Bestromen der bestrombaren Wicklung mit einem modulierten Strom, insbesondere einem pulsweiten modulierten Strom (PWM-Strom), erreicht werden. Ganz besonders bevorzugt wird eine niederfrequente PWM-Frequenz gewählt. Die resultierende Scherspaltbreite ist dabei abhängig vom PWM-Signal. Ganz besonders bevorzugt sind die Steuermittel derart ausgelegt, dass das PWM-Signal veränderbar ist, um eine Vielzahl unterschiedlicher Scherspaltbreiten einstellen zu können.

Bevorzugt ist der Scherspalt erst bei maximal vorgesehener Bestromung der bestrombaren Wicklung null und die Kupplung synchronisiert erst dann über den Reibschluss zwischen Abtrieb und Anker.

Anders ausgedrückt ist die bestrombare Wicklung über die Steuermittel bevorzugt mit unterschiedlichen effektiven Stromstärken bestrombar, wobei unter einer effektiven Stromstärke die flussrelevante Stromstärke verstanden wird, also die Stromstärke der Elektromagnetanordnungsbestromung (Wicklungsbestromung), die zur Erzielung des magnetischen Feldes zur Verfügung steht bzw. zu der das erzeugte magnetische Feld bzw. der erzeugte magnetische Fluss in einem funktionalen Zusammenhang steht. Wird die Elektromagnetanordnung beispielsweise mit konstanten Gleichströmen bestromt (was alternativ zu einer PWM-Bestromung realisierbar ist), so ist unter der effektiven Stromstärke diese jeweils konstante Stromstärke (nicht gepulste Ströme) zu verstehen. Wird die Elektromagnetanordnung, was bevorzugt ist, beispielsweise mittels eines PWM-Signals bestromt, so ist unter der effektiven Stromstärke die resultierende bzw. in einem bestimmten Zeitintervall, insbesondere in einer Periode, mittlere Stromstärke zu verstehen. Besonders zweckmäßig ist es dabei, wenn der Spalt durch die Wahl unterschiedlicher effektiver Stromstärken in mehreren Stufen oder kontinuierlich einstellbar ist, um eine besonders gute Modulation des Schlupfes der Flüssigkeitsreibungskupplungsmittel zu ermöglichen. Die unterschiedlichen effektiven Stromstärken können beispielsweise durch Bestromen mit unterschiedlichen PWM-Tastverhältnissen eingestellt werden oder durch unterschiedlich hohe Konstantströme (nicht gepulste Ströme). Unter dem PWM-Tastverhältnis wird dabei das Verhältnis in einer Periode zwischen dem Zeitanteil, in dem der Strom eingeschaltet ist zu dem Zeitanteil verstanden, in dem der Strom ausgeschaltet ist.

Besonders bevorzugt kann durch die Verwendung einer PWM Frequenz von kleiner als 10Hz eine Taktung des Scherspaltmasses zwischen Ankerscheibe und Abtrieb erzeugt werden, die sich durch die Tragheiten des Gesamtsystems nicht in signifikante Drehmoment- und damit Drehzahlschwankungen niederschlägt. Das über Zeit gemittelte Spaltmaß entspricht dem übertragenen Drehmoment. Diese Art der Modulation kann eine Proportionalität auch bei Schaltmagneten erzeugen und Hystereseeffekte verringern.

Zusätzlich oder alternativ zu einer Scherspaltvariation ist es möglich, das Schleppmoment durch eine Fluidfüllstandsvariation, beispielsweise elektromagnetisch oder bimetall-gesteuert, im Arbeitsraum einzustellen. Bevorzugt sind entsprechende, von herkömmlichen Fluidreibungskupplungen bekannte Mechanismen vorgesehen.

Durch das Vorsehen von Mitteln zur Füllstandsvariation (gesteuerte Variante) kann die Abtriebsdrehzahl im Schleppbereich in weiten Grenzen bedarfsabhängig variiert werden. Im Falle des Vorsehens eines Bi-Metall Mechanismus kann zudem die Ansteuerung ohne Vorsehen oder Anbinden einer bzw. an eine elektronische Steuereinrichtung erfolgen. Zudem können sehr niedrige Abtriebsdrehzahlen erreicht werden, wenn durch geeignete Ansteuerung des Fluidventils eine größere Fluidmenge in dem Fluidreservoir gehalten wird.

Besonders bevorzugt ist eine Ausführungsform, bei welcher die Mittel zur Einstellung des Fluidstandes in dem mindestens einen von dem Anker begrenzten Scherspalt und/oder in dem fakultativ vorgesehenen Konstant-Scherspalt ein Fluidventil (Steuerventil) umfassen, mit dem der Fluidfluss aus einem Fluidreservoir in den mindestens einen Scherspalt bzw. Konstant-Scherspalt und/oder aus dem Scherspalt bzw. dem Konstant-Scherspalt in das Fluidreservoir beeinflussbar ist. Die Aktuierung des Fluidventils kann beispielsweise über einen Bimetallmechanismus erfolgen, oder über Elektromagnetmittel. Diese können einen eigens hierfür vorgesehenen Elektromagneten umfassen, mit welchem ein Ventilanker, beispielsweise ein Klappanker, Hubanker oder ein Rotationsanker, des Fluidventils verstellbar ist. Ganz besonders bevorzugt ist es, wenn auf einem separaten Elektromagneten verzichtet wird und stattdessen die betrombare Wicklung der Reibscheibenkupplungsmittel derart ausgebildet und auf das Fluidventil abgestimmt ist, dass durch geeignete Bestromung der bestrombaren Wicklung, insbesondere in einen unteren Bestromungsbereich das Fluidventil der Viskokupplung ansteuerbar ist. Anders ausgedrückt ist das hydraulische Steuerventil der Viskokupplung (Fluidventil) zur Einstellung des Schlupfes mittels der Elektromagnetanordnung der Reibscheibenkupplung ansteuerbar. Noch anders ausgedrückt ist bei der weiterbildungsgemäßen Kupplung einer Elektromagnetanordnung zum Betätigen des Ankers der Reibscheibenkupplung derart ausgebildet und angeordnet, dass diese, vorzugsweise in Abhängigkeit von deren effektiver Bestromung, die Reibscheibenkupplung schaltet sowie das Fluidventil der Viskokupplung ansteuert bzw. verstellt, um somit die Drehmomentübertragung in der Flüssigkeitsreibungskupplung im Scherspalt zur Verfügung stehende Fluidmenge, insbesondere Ölmenge einzustellen. Weiterbildungsgemäß ist also eine gemeinsame Elektromagnetanordung für die Reibscheibenkupplungsmittel und die Flüssigkeitsreibungsmittel vorgesehen, mit der sowohl der Anker der Reibscheibenkupplung als auch ein dem Fluidventil (Steuerventil) der Flüssigkeitsreibungskupplungsmittel zugeordneter Anker zur Einstellung des Schlupfes der integrierten Flüssigkeitsreibungskupplung betätigbar ist. Dabei können der Elektromagnetanordnung gemäß einer ersten Ausführungsform zwei magnetische Flusskreise zugeordnet werden bzw. werden von dieser erzeugt, wobei ein erster Flusskreis zur Betätigung des Ankers der Reibscheibenkupplung dient und der zweite magnetische Flusskreis zur Verstellung des Ankers des elektromagnetisch betätigbaren hydraulischen Steuerventils zur Einstellung des Schlupfes der Flüssigkeitsreibungskupplung.

Alternativ ist eine Ausführung mit einem einzigen Magnetkreisring realisierbar, insbesondere dann, wenn zum Verstellen des Hydraulikventils der Viskosekupplung ein Drehanker vorgesehen wird. Selbstverständlich ist es auch möglich, anders ausgebildete Anker, wie Schiebeanker, Hubanker oder Klappanker des Fluidventils mit einem einzigen Flusskreis anzusteuern. Im Falle der Realisierung eines einzigen Flusskreises muss dieser also die Luftspalte bzw. Arbeitsspalte beider Anker (Reibscheibenanker sowie Steuerventilanker der Viskokupplung) überbrücken.

Für den Fall der Realisierung eines Bimetallmechanismus zum Verstellen des Ventilelements des Steuerventils der Fluidreibungskupplungsmittel hat es sich als vorteilhaft herausgestellt, das Steuerventil primärseitig vorzusehen, d.h. mittelbar oder unmittelbar drehfest mit der Antriebswelle zu verbinden, um hierdurch sehr kurze Reaktionszeiten sicherstellen zu können. Es resultieren zudem Vorteile bei der Abschaltzeit durch eine höhere Schlupfabstimmung bei einer Vollzuschaltung des Viskoteils der Kupplung. Als besonders vorteilhaft hat es sich bei einer derartigen Ausführungsform herausgestellt, wenn der Bimetallmechanismus zum Betätigen des primärseitigen Steuerventils, insbesondere axial durch den Sekundärteil hindurchgeführt ist, wobei eine Abdichtung in diesem Fall beispielsweise über eine Radialwellendichtung realisiert werden kann. Eine Bimetallspirale des Bimetallmechanismus befindet sich dabei bevorzugt endseitig an einer axial durch die Sekundärseite (d.h. an einer durch den Abtrieb hindurch geführten) Befestigung. Bevorzugt ist ein Ventilarm des mit dem Antrieb mitbewegten Steuerventils relativ zu dem Antrieb und insbesondere relativ zu der vorgenannten primärseitigen Befestigung bewegbar, insbesondere verschwenkbar. Noch weiter bevorzugt durchsetzt dieser Ventilarm die vorgenannte, an der Antriebswelle festgelegte Befestigung in radialer Richtung. Alternativ kann auch eine längere, die Sekundärseite durchsetzende Antriebswelle vorgesehen werden, die von dem Bimetallmechanismus durchsetzt ist und an der endseitig ein Bimetallelement festgelegt ist.

Für den Fall der Kombination von Mitteln zur Füllstandsvariation mit einem Konstant-Scherspalt, der nicht von dem verstellbaren Anker sondern vorzugsweise von einer drehfest mit der Antriebswelle verbundenen Scheibe begrenzt ist, ist es besonders von Vorteil, wenn die Ventilöffnung des Ventils (Fluidventil bzw. Steuerventil), mit dem der Fluidfluss aus einem Fluidreservoir in den Arbeitsraum beeinflussbar ist, in dieser Scheibe vorgesehen ist.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:

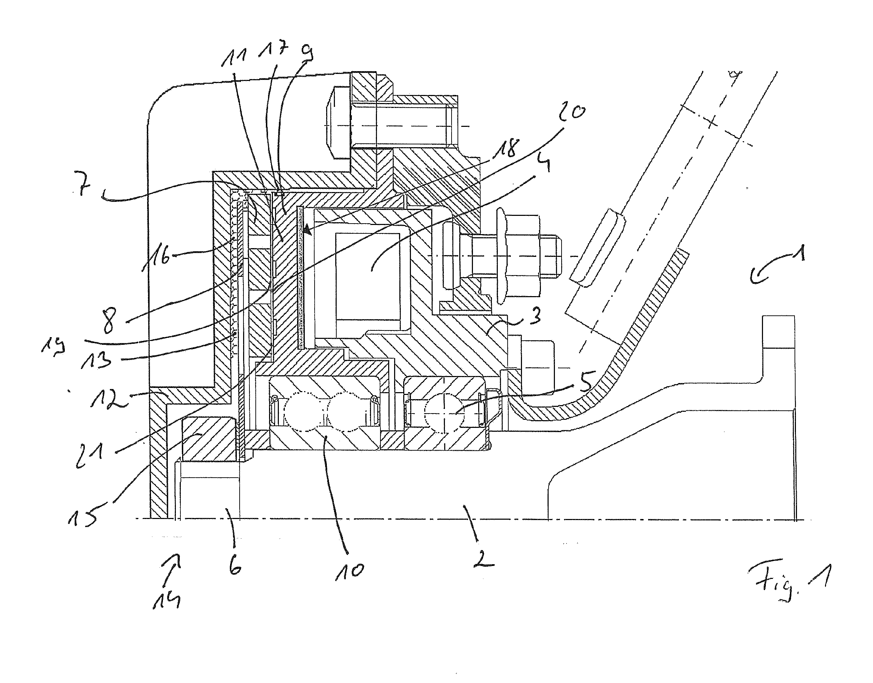

- Fig. 1: eine geschnittene Teilansicht einer Kupplungsanordnung aus einem Antriebsstrang zum Antreiben eines Lüfterrades in einem Kfz mit ungesteuerten Flüssigkeitsreibungsmitteln,

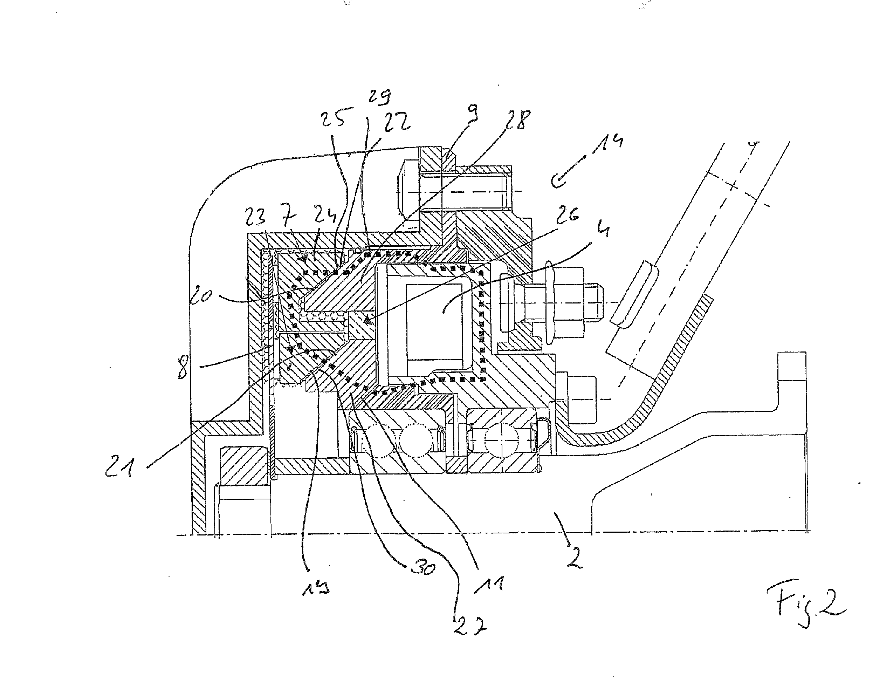

- Fig. 2: ein alternatives Ausführungsbeispiel einer Kupplungsanordnung mit konischen Reibflächenpaaren,

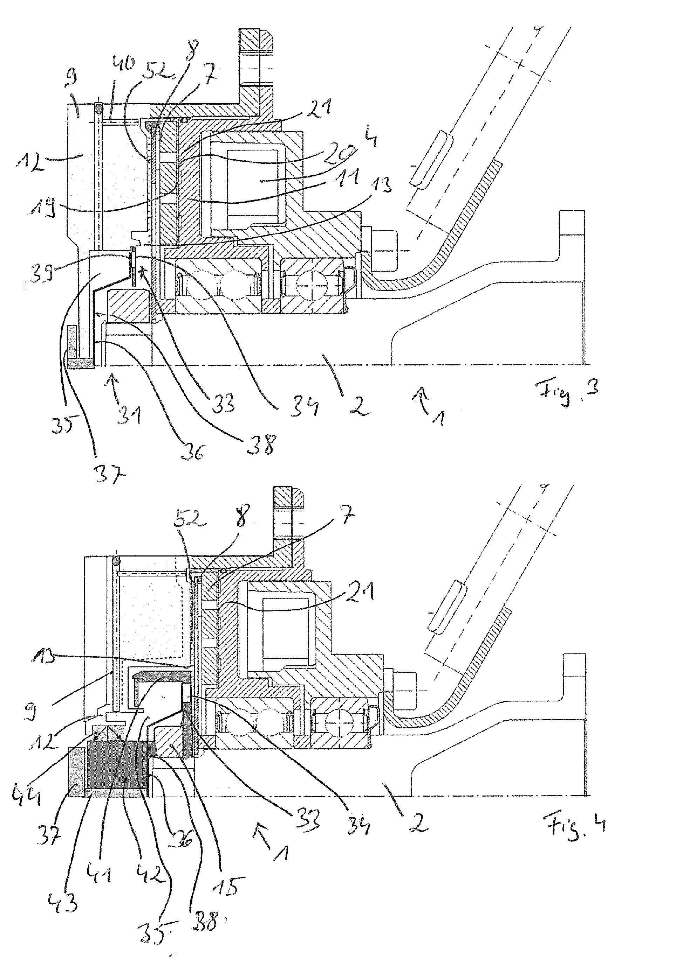

- Fig. 3: ein alternatives Ausführungsbeispiel einer Kupplungsanordnung mit Reibscheiben- und Flüssigkeitsreibungskupplungsmitteln, wobei letztere einen Bimetallmechanismus zum Betätigen eines Steuerventils umfassen, um hiermit den Fluidstand in den Scherspalten der Flüssigkeitsreibungskupplungsmittel beeinflussen zu können,
- Fig.4: ein weiteres alternatives Ausführungsbeispiel einer Kupplungsanordnung mit Mitteln zur Beeinflussung des Fluidfüllstandes in den Scherspalten, wobei auch diese einen Bimetallmechanismus umfassen, wobei jedoch das Fluidventil (Steuerventil) primärseitig angeordnet ist, d.h. die Fluidventilöffnung ist drehfest mit der Antriebswelle verbunden,

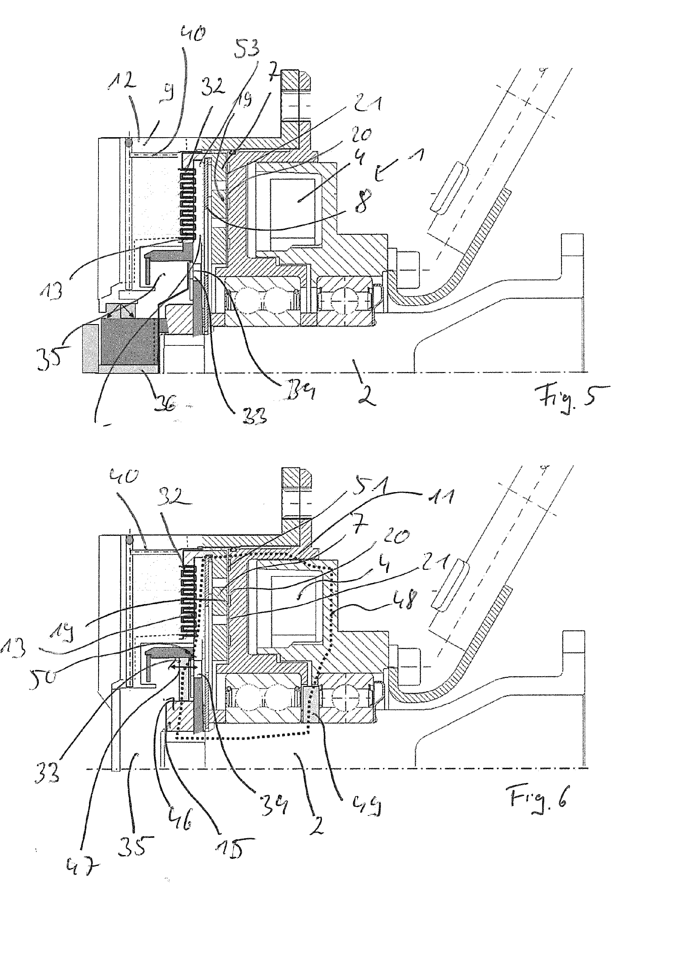

- Fig. 5: eine weitere alternative Ausführungsform einer Kupplungsanordnung mit Mitteln zur Einstellung des Fluidstandes, wobei die Fluidflüssigkeitsreibungskupplungsmittel auf einer von den Reibflächen der Reibscheibenkupplungsmittel abgewandten Seite einen weiteren, als Labyrinthspalt ausgebildeten Scherspalt umfassen, und
- Fig. 6: ein weiteres alternatives Ausführungsbeispiel einer Kupplungsanordnung, bei welcher die Mittel zur Einstellung des Fluidstandes im Scherspalt Elektromagnetmittel umfassen, die in dem konkreten Ausführungsbeispiel von der bestrombaren Wicklung der Reibscheibenkupplungsmittel gebildet sind.

In den Figuren sind gleiche Elemente und Elemente mit der gleichen Funktion mit den gleichen Bezugszeichen gekennzeichnet.

In Fig. 1 ist die obere Hälfte einer Kupplungsanordnung 1 in einem Nebenaggregatantriebsstrang eines Kraftfahrzeugs gezeigt.

Die Kupplungsanordnung umfasst eine von einem nicht dargestellten Verbrennungsmotor angetriebene Antriebswelle 2, die relativ zu einer Elektromagnetanordnung 3 rotierbar ist. Die feststehende, eine bestrombare Wicklung 4 umfassende Elektromagneteinheit 3 stützt sich über ein hier aus Kugellager ausgebildetes Wälzlager 5 in radialer und axialer Richtung an der Antriebswelle 2 ab.

Im Bereich eines freien Endes 6 der Antriebswelle 2 ist an dieser ein als Ankerscheibe ausgebildeter Anker 7 (Ankerscheibe) drehfest festgelegt und zwar über eine scheibenförmige Rückstellfeder 8. Der Anker 7 ist durch Bestromen der Wicklung 4 relativ verstellbar zu einem Abtrieb 9, der relativ zu der Antriebswelle 2 rotierbar angeordnet ist und sich an dieser über ein als Doppelkugellager ausgebildetes Wälzlager 10 abstützt. Am Abtrieb 9 können beispielsweise Lüfterschaufeln festgelegt sein. Auch ist es denkbar, den Abtrieb 9 als Riemenscheibe auszugestalten, um hierüber das Drehmoment zum Nebenaggregat übertragen zu können. Bei dem Ausführungsbeispiel gemäß Fig. 1 ist der Anker 7 axial verspannt gegen die inneren Laufringe der Wälzlager 5, 10 mittels einer Mutter 15, die axial auf einen endseitigen Außengewindeabschnitt der Antriebswelle 2 aufgeschraubt ist.

Der Abtrieb 9 umfasst ein rotierbares Polflächenteil 11, welches sich axial zwischen dem Anker 7 und der bestrombaren Wicklung 4 befindet. Das Polflächenteil 11 ist, hier durch Verschrauben, festgelegt an einem Gehäuseteil 12 des Abtriebs und begrenzt mit diesem einen Arbeitsraum 13 der als kombinierte Reibscheiben- und Flüssigkeitsreibungskupplung ausgebildeten Kupplung 14, in welchem der Anker 7, hier axial, verstellbar angeordnet ist.

Wie in Fig. 1 graphisch angedeutet ist, ist der Arbeitsraum 13 mit einem scherbaren Fluid 16, hier einem Silikonöl, gefüllt. Dieses dient zur Übertragung eines Schleppmomentes zwischen Anker 7 und Abtrieb 9 bei nicht an dem Abtrieb 9 anliegendem bzw. reibschlüssig gekuppeltem Anker 7. Damit das Fluid 16 nicht von dem Arbeitsraum 13 in den Bereich der Wicklung 4 gelangen kann, ist der Arbeitsraum 13 über eine als O-Ring-Dichtung ausgebildete Elastomerdichtung abgedichtet. Die Elastomerdichtung 17 befindet sich radial zwischen dem Polflächenteil 11 des Abtriebs 9 und dem Gehäuse 12 des Abtriebs 9.

Mit dem Bezugszeichen 18 ist eine Dichtscheibe gekennzeichnet, welche eine Möglichkeit darstellt den Arbeitsraum 13 öldicht abzuschließen. Der Polflächenteil 11 des Abtriebs 9 beinhaltet magnetische Trennmittel die entweder Luft (Spalte) oder ein nicht ferritischen Füllstoff (z.B. Bronze) beinhalten. - Diese sind in dem Schnitt nicht dargestellt.

Axial zwischen einer der Wicklung 4 zugewandten Reibfläche 19 des Ankers und einer gegenüberliegenden Reibfläche 20 des Abtriebs 9, genauer des Polflächenteils 11, ist ein sich in radialer sowie in Umfangsrichtung erstreckender axialer Scherspalt 21 gebildet, in welchem das Fluid 16 geschert wird und ein Drehmoment (Schleppmoment) zwischen Anker 7 und Abtrieb 9 überträgt. Das übertragene Drehmoment ist nicht nur abhängig von der Drehzahl der Antriebswelle 2, sondern auch von der (mittleren) Spaltbreite des Scherspaltes 21. Diese Spaltbreite kann eingestellt werden durch eine entsprechende Bestromung der Wicklung 4. Dieser sind zu diesem Zweck nicht dargestellte Steuermittel zugeordnet, über welche die Wicklung 4 zur Erzeugung unterschiedlicher effektiver Stromstärken mit unterschiedlichen PWM-Signalen bestrombar ist, wobei die resultierende effektive Stromstärke die Scherspaltbreite bestimmt. Erst ab Überschreiten einer definierten effektiven Stromstärke kommt der Anker 7 zur reibschlüssigen Anlage am Abtrieb 9, um dann das volle Antriebsdrehmoment auf den Abtrieb zu übertragen.

Das Ausführungsbeispiel gemäß Fig. 2 entspricht von seinem grundsätzlichen Aufbau her dem Ausführungsbeispiel gemäß Fig. 1, so dass zur Vermeidung von Wiederholungen im Folgenden im Wesentlichen auf Unterschiede zu dem Ausführungsbeispiel gemäß Fig. 1 eingegangen wird. Im Hinblick auf die (offensichtlichen) Gemeinsamkeiten wird auf Fig. 1 mit zugehöriger Figurenbeschreibung verwiesen.

Im Unterschied zu dem Ausführungsbeispiel gemäß Fig. 1 ist die Gestaltung der Reibflächen sowie der Scherspalte unterschiedlich. Insbesondere ist deren Geometrie so gewählt, dass großflächigere Reibflächen resultieren, zum einen, um bei nicht reibschlüssig miteinander verbundenem Anker 7 und Abtrieb 9 größere Schleppmomente übertragen zu können und um zum anderen bei Reibschluss zwischen Anker 7 und Abtrieb 9 größere Antriebsdrehmomente übertragen zu können.

In Fig. 2 ist zudem der magnetische Fluss 22 bei Bestromung der bestrombaren Wicklung 4 angedeutet.

Aus Fig. 2 ist vor allem die unterschiedliche Gestaltung des Ankers 7 zu erkennen. Dieser umfasst in dem gezeigten Ausführungsbeispiel zwei Polstücke, nämlich ein radial inneres Polstück 23 und ein radial dazu beabstandetes, äußeres Polstück 24. Jedes Polstück 23, 24 hat eine Reibfläche 19, 25, wobei in dem gezeigten Ausführungsbeispiel beide Reibflächen 19, 25 (innen) konisch konturiert sind. Jeder Reibfläche 19, 25 des Ankers 7, die jeweils über eine, vorzugsweise organische, Beschichtung gebildet sein können, ist eine gegenüberliegende, parallel ausgerichtete Reibfläche 20, 30 am Abtrieb 9, genauer am Polflächenteil 11 zugeordnet. Die Reibflächen 19, 30 und 25, 20 bilden jeweils ein Reibflächenpaar. Eine radial innere Reibfläche 30 befindet sich an einem radial inneren Abschnitt 27 des Polflächenteils 11, welcher in radialer Richtung über einen Trennabschnitt 26 aus nicht oder schlecht leitendem magnetischen Material von einem radial äußeren Abschnitt 28 getrennt ist. Der magnetische Fluss verläuft folglich von einem der Abschnitte zunächst in den Anker 7, dort in radialer Richtung von einem der Polstücke zu dem benachbarten Polstück und dann zurück in den jeweils anderen Abschnitt des Polteils 11. Hierbei überquert der magnetische Fluss sowohl den radial inneren Scherspalt 21 als auch den radial äußeren Scherspalt 29. Die mittlere Spaltbreite der Scherspalte 21, 29 ist analog zu dem Ausführungsbeispiel gemäß Fig. 1 über eine entsprechend modulierte Bestromung der Wicklung 4 einstellbar und haltbar. Ab Überschreiten einer definierten effektiven Bestromung liegt der Anker 7, der über die Wicklung 4 entgegen der Rückstellfeder 8 verstellbar ist, am Polflächenteil 11 an, so dass das volle Antriebsdrehmoment von der Antriebswelle 2 auf den Abtrieb 9 und somit auf das Nebenaggregat übertragbar ist.

Der Aufbau des Ausführungsbeispiels gemäß Fig. 3 entspricht im Wesentlichen dem Aufbau des Ausführungsbeispiels gemäß Fig. 1, so dass zur Vermeidung von Wiederholungen im Folgenden im Wesentlichen auf die Unterschiede eingegangen wird. Im Hinblick auf die Gemeinsamkeiten wird auf Fig. 1 mit zugehöriger Figurenbeschreibung verwiesen.

Bei dem Ausführungsbeispiel gemäß Fig. 3 sind die Flüssigkeitsreibungskupplungsmittel nicht ungesteuert ausgebildet, sondern umfassen Mittel zur Einstellung des Mittels 31 zur Einstellung des Fluidfüllstandes in den Scherspalten 21 und 32 der Flüssigkeitsreibungskupplungsmittel. Bei den Scherspalten handelt es sich zum einen um den bereits erläuterten Scherspalt zwischen den Reibflächen 19, 20 der Reibungskupplungsmittel und zum anderen um den Scherspalt 52, der in dem gezeigten Ausführungsbeispiel parallel zu dem Scherspalt 21 verläuft. Der Scherspalt 52 befindet sich rückseitig des Ankers 7, d.h. auf einer von den Reibflächen 19, 20 abgewandten Seiten und ist begrenzt von dem Anker 7, genauer von dessen Rückstellfeder 8 einerseits und dem Gehäuse 12 des Abtriebs 9 andererseits. Der Abtrieb 9 dient, wie bei den vorhergehenden Ausführungsbeispielen zum Antreiben eines Nebenaggregates in einem Kraftfahrzeug, insbesondere von Lüfterschaufeln. Der Scherspalt 52 ist derart ausgelegt, dass mit diesem durch Scherung des darin befindlichen Fluids, bevorzugt einem Silikonöl, Schleppdrehmomente zwischen dem Anker 7 und dem Abtrieb 9 übertragen werden. Auch werden Schleppmomente durch diese Scherung des Fluids zwischen dem Anker 7 und dem zum Scherspalt 21 benachbarten Polflächenteil 11 des Abtriebs 9 übertragen.

Da der Scherspalt 52 ebenso wie der Scherspalt 21 von dem verstellbaren Anker begrenzt ist, ist dessen Spaltbreite variabel bzw. ändert sich bei entsprechender Bestromung der bestrombaren Wicklung 4.

Anstelle des variablen Spaltes 52 könnte auch ein Konstant-Scherspalt z.B. wie in den Ausführungsbeispielen gemäß Fig. 5 und 6 vorgesehen werden. Dieser müsste dann von einem mit der Antriebswelle 2 verbundenen Bauteil, insbesondere einer starren Scheibe begrenzt sein, die sich bei einer Verstellung des Ankers nicht mit diesen mitbewegt. Diese bevorzugt gemeinsam mit dem Anker in einem gemeinsamen Arbeitsraum angeordnete Scheibe könnte in der Zeichnungsebene links von der Rückstellfeder 8 angeordnet werden, wobei es denkbar wäre den verstellbaren Anker über geeignete Rückstellfedermittel an dieser starren Scheibe festzulegen, so dass die Rückstellfeder nicht wie in dem gezeigten Ausführungsbeispiel unmittelbar an der Antriebswelle 2 festgelegt sein müsste.

Wie bereits angedeutet, sind die Flüssigkeitsreibungskupplungsmittel gesteuert ausgebildet, und umfassen hierzu ein abtriebsseitiges Fluidventil 33, mittels dessen der Fluidfüllstand in den Scherspalten 21, 32 einstellbar ist. Das Fluidventil 33 umfasst eine Ventilöffnung 34, durch die zu scherendes Fluid aus einem Fluidreservoir 35 in den Arbeitsraum 13, der Scherspalte 21, 52 fliehkraftbedingt strömen kann, wenn die Ventilöffnung 34 geöffnet ist. Zum Öffnen und Schließen der Ventilöffnung ist ein Bimetallmechanismus 36 vorgesehen, umfassend eine Bimetallspiralfeder 37, die am Abtrieb 9, genauer am Gehäuse 19 mit Axialabstand zu und entkoppelt von der Antriebswelle 2 angeordnet ist, wobei sich die Spiralfeder 37 in Abhängigkeit einer Temperatur, insbesondere einer Lufttemperatur der einen Kühler durchströmenden Kühlluft verstellt und zwar hier in Umfangsrichtung und dadurch einen mit der Bimetallfederspirale 37 verbundenen Ventilarm 38 (Schwenkarm) in Umfangsrichtung verschwenkt, so dass ein einen Ventilkörper bildender Endabschnitt 39 des Ventilarms 38 relativ zu der Ventilöffnung 34 verschwenkt wird und in Abhängigkeit der Temperatur, welcher die Bimetallfederspirale 37 ausgesetzt ist, die Ventilöffnung 34 mehr oder weniger freigibt. Bevorzugt ist die Bimetallfederspirale 37 so ausgelegt, dass der Verstellweg proportional zur Temperaturänderung ist.

Wie erläutert, kann also Fluid, hier Silikonöl, aus dem Fluidreservoir 35 über die Ventilöffnung 34 in den Arbeitsraum 13 strömen, wenn die Kupplungsanordnung rotiert. Fliehkraftbedingt wird das Fluid nach radial außen verdrängt und kann über eine Rücklaufschikane 40, umfassend einen Axialkanal und einen Radialkanal sowie einen Staudruckmechanismus (nicht dargestellt), der den nötigen Druck vor den Kanälen erzeugt, um eine Strömung in Richtung Fluidreservoir zu bewirken, die im Gehäuseteil 12 vorgesehen sind, wieder zurück zum Fluidreservoir 35 strömen. Bei dem Ausführungsbeispiel gemäß Fig. 3 kann wie bei allen ein Fluidventil (Steuerventil) aufweisenden Flüssigkeitsreibungskupplungsmitteln auf eine PWM-Ansteuerung der bestrombaren Wicklung 4 zur Beeinflussung des Scherspaltes 21 und damit eine gegenläufige Beeinflussung des Scherspaltes 52 verzichtet werden. Bei Bedarf kann jedoch eine solche Ansteuermöglichkeit zusätzlich vorgesehen werden, was insbesondere dann interessant ist, wenn die Scherspalte 21, 52 derart ausgelegt sind, dass mit diesen unterschiedlich große maximale Schleppmomente übertragbar sind.

Das Ausführungsbeispiel einer Kupplungsanordnung gemäß Fig. 4 entspricht im Wesentlichen dem Aufbau des Ausführungsbeispiels gemäß Fig. 3, so dass zur Vermeidung von Wiederholungen auf das Ausführungsbeispiel gemäß Fig. 3 und ergänzend auf das Ausführungsbeispiel gemäß Fig. 1 mit zugehöriger Figurenbeschreibung verwiesen wird.

Auch bei dem Ausführungsbeispiel gemäß Fig. 4 umfasst die Kupplungsanordnung 1 gesteuerte Flüssigkeitsreibungskupplungsmittel mit einem Bimetallmechanismus 36 zur Variation des Fluidstandes in den Scherspalten 32, 21, wobei im Unterschied zu dem Ausführungsbeispiel gemäß Fig. 3 das Fluidventil 33 und insbesondere dessen Ventilöffnung 34 antriebsseitig angeordnet sind - dies bedeutet, dass die Ventilöffnung 34 bzw. das sie tragende und den Arbeitsraum 13 begrenzende, aus Montagegründen hier zweiteilig ausgeführte Bauteil 41 drehfest mit der Antriebswelle 2 verbunden ist. Das Bauteil 41 ist hierzu mittels der Mutter 15 axial geklemmt zwischen der Rückstellfeder 8 des Ankers 7 und der vorgenannten Mutter 15, welche endseitig auf die Antriebswelle 2 geschraubt ist. In der Zeichnungsebene links von der Mutter 15 befindet sich ein Antriebswellenverlängerungsteil 42, welches drehfest mit der Antriebswelle verbunden ist, und durch das eine Achse 43 des Bimetallmechanismus geführt ist, die die Bimetallfederspirale 37, welche ebenfalls abtriebsseitig angeordnet ist, mit dem Ventilarm 38 verbindet, so dass dieser relativ zu der Ventilöffnung 34, insbesondere um etwa 10° bis 15° verschwenkbar ist. Der Abtrieb 9, insbesondere das Gehäuseteil 12 ist über eine Radialwellendichtung 44 zur Abdichtung des Fluidreservoirs 35 gegenüber dem Verlängerungsteil 42 (gleichzeitig Befestigungsteil für das Bimetallelement), welches drehfest an der Antriebswelle 2 festgelegt ist, abgedichtet.

Im Folgenden wird das Ausführungsbeispiel gemäß Fig. 5 beschrieben, welches im Wesentlichen der Ausführungsform gemäß Fig. 4 entspricht, so dass zur Vermeidung von Wiederholungen im Wesentlichen auf die Unterschiede eingegangen wird. Im Hinblick auf die Gemeinsamkeiten wird auf Fig. 4 und ergänzend auf die Fig. 3 und 1 mit zugehöriger Figurenbeschreibung verwiesen.

Die Kupplungsanordnung 1 gemäß Fig. 5 umfasst ebenfalls über einen Bimetallmechanismus 36 sowie ein Fluidventil 33 gesteuerte Flüssigkeitsreibungskupplungsmittel, die wie bei dem Ausführungsbeispiel gemäß Fig. 4 beschrieben ausgebildet sind. Im Unterschied zu dem Ausführungsbeispiel gemäß Fig. 4 ist der von den Reibflächen 19, 20 abgewandte (weitere) Scherspalt 32 nicht von dem Anker 7 begrenzt. Vielmehr ist dieser Scherspalt als Konstant-Scherspalt 32 ausgebildet, der seine Spaltbreite beim Verstellen des Ankers 7 durch Bestromen der Wicklung 4 nicht verändert. Dies wird dadurch erreicht, dass zusätzlich zu dem Anker 7 eine vergleichsweise starre Scheibe 53 vorgesehen ist, die drehfest mit der Antriebswelle 2 verbunden ist. Der Anker 7 ist relativ zu der Scheibe 53 durch Bestromen der Wicklung 4 axial verstellbar. Der Konstant-Scherspalt kann als gewöhnlicher Axialspalt ausgebildet werden, oder was bevorzugt ist, wie in dem gezeigten Ausführungsbeispiel als Labyrinth ausgebildet. Hierzu greifen die Scheibe 53 und der Abtrieb 9, insbesondere hier das Gehäuseteil 12 in axialer Richtung verzahnungsartig ineinander. Um dies zu ermöglichen trägt die Scheibe 53 eine Verzahnungsgeometrie, die axial in eine korrespondierende Verzahnungsgeometrie des Gehäuseteils 12 eingreift, so dass ein labyrinthartiger Scherspalt 32 entsteht, der abwechselnd radiale und axiale Abschnitte (Scherflächenpaarungen) aufweist, wobei an jeden Radialabschnitt zwei Axialabschnitte angrenzen, die in die selbe Axialrichtung weisen, so dass das Fluid nach jedem Radialabschnitt die Axialrichtung ändern muss. Auf diese Weise können auf kleinstem Raum große Scherflächen bereitgestellt werden. Alternativ ist selbstverständlich auch eine Ausführungsform möglich, bei der es sich bei der Scheibe 53 um keine unmittelbar an der Welle 2 festgelegte Scheibe handelt, sondern um ein Ringscheibenteil, welches auf der von den Reibflächen 19, 20 abgewandten Seite der Rückstellfeder angeordnet ist und das sich in diesem Fall gemeinsam mit dem Anker bei Bestromung der Wicklung 4 verstellt. In diesem Fall wird es sich bei dem mit Bezugszeichen 32 gekennzeichneten Spalt nicht um einen Konstant-Scherspalt sondern um einen variablen Scherspalt handeln.

Bei dem Ausführungsbeispiel gemäß Fig. 5 gelangt das Fluid bei in Betrieb befindlicher Kupplungsanordnung und geöffneter Ventilöffnung 34 aus dem Fluidreservoir 35 in den Arbeitsraum 13, d.h. die Scherspalte 21, 32 und kann über eine im Abtrieb vorgesehene Rücklaufschikane 40 wieder zurückströmen. Die Ventilöffnung ist gemäß einer bevorzugten Ausführungsform in der Scheibe 53 vorgesehen. Wie bei dem Ausführungsbeispiel gemäß Fig. 4 ist eine Radialbohrung des Rücklaufweges über eine Kugel in radialer Richtung nach außen verschlossen.

Das Ausführungsbeispiel gemäß Fig. 6 entspricht von seinem grundsätzlichen Aufbau her dem Aufbau des Ausführungsbeispiels gemäß Fig. 5, so dass im Folgenden zur Vermeidung von Wiederholungen im Wesentlichen nur auf Unterschiede eingegangen wird. Im Hinblick auf Gemeinsamkeiten wird auf die Ausführungsbeispiele gemäß den Fig. 1, 3, 4 und 5 mit zugehöriger Figurenbeschreibung verwiesen.

Bei dem gezeigten Ausführungsbeispiel sind die Flüssigkeitsreibungskupplungsmittel ebenfalls gesteuert ausgebildet, jedoch nicht über einen Bimetallmechanismus, sondern über einen Elektromagnetmechanismus 46, umfassend einen hier beispielhaft als axial verschwenkbaren Klappanker 47, der mit Hilfe von Elektromagnetmitteln betätigbar ist, um die antriebsseitige Ventilöffnung 34, d.h. den Durchströmquerschnitt mehr oder weniger freizugeben. Der Anker 47 ist, wie erläutert als Klappanker ausgebildet, der mit seinem radial unteren Ende antriebsseitig, hier im Bereich der Mutter 15 festgelegt ist, wobei sein radial äußeres Ende bei Bestromung der Wicklung 4 relativ zur Ventilöffnung 34 verschwenken kann.

An Stelle eines Klappankers kann auch ein Rotationsanker (Drehanker) vorgesehen werden oder ein axial verstellbarer Ankerkolben. Die Elektromagnetmittel können im einfachsten Fall (nicht dargestellt) einen separaten, d.h. dem Fluidventil 33 zugehörigen bzw. diesem ausschließlich zugeordneten Elektromagneten umfassen. Besonders bevorzugt ist die gezeigte Ausführungsform, bei der die Elektromagnetmittel von der bestrombaren Wicklung 4 gebildet sind, die zum Verstellen des Ankers 7 der Reibscheibenkupplungsmittel dient. Angedeutet ist der magnetische Fluss 48, welcher durch Bestromen der Wicklung 4 generierbar ist.

Die Konstruktion ist so ausgelegt, dass bei maximaler Bestromung der Anker 7 in Richtung Wicklung 4 verstellt wird, so dass die Reibflächen 19, 20 reibschlüssig aneinanderliegen. In einem unteren Bestromungsbereich kann die Relativstellung des Ventilankers 47 relativ zur Ventilöffnung 34 beeinflusst werden. Zu erkennen ist, dass der magnetische Fluss 48 über geeignete Magnetleitmittel 49 in die Antriebswelle 2 eingekoppelt wird und an in den als Klappanker ausgeführten Ventilanker 47 gelangt und nach dessen Durchqueren ein Arbeitsluftspalt 50 zwischen dem Klappanker und dem die Ventilöffnung 34 aufweisenden Bauteil überbrücken muss und dann in radialer Richtung sowie in axialer Richtung innerhalb des Ankers 7 fließt, um einen weiteren Arbeitsluftspalt 51, genauer den Scherspalt 21 zu überbrücken in Richtung Polflächenteil 11 des Antriebs.

Eine Kupplungsanordnung 1, wie sie beispielhaft in Fig. 6 dargestellt ist, bei welcher das Ventil 34 über die bestrombare Wicklung 4 der Reibscheibenkupplungsmittel beeinflussbar bzw. einstellbar ist kann (unabhängig von der konkret dargestellten Konstruktionsvariante) mit unterschiedlicher Steuerlogik ausgelegt werden. So ist es gemäß einer ersten Alternative möglich, dass das Ventil 34 mit zunehmender Bestromung der Wicklung 4 geöffnet wird, wobei eine vollständige Öffnung ab einer bestimmten Bestromung, von vorzugsweise zwischen 30 % bis 50 % der maximalen Bestromung vollständig geöffnet ist. Gemäß einer zweiten Alternative kann das Ventil 34 ohne Bestromung der Wicklung 4 vollständig geöffnet sein und wird mit zunehmender Bestromung geschlossen. Bei maximaler Bestromung schaltet jeweils die Reibscheibenkupplung zu, d.h. der Anker 7 kommt zur Anlage am Polflächenteil 11.

### Bezugszeichenliste

- 1: Kupplungsanordnung
- 2: Antriebswelle
- 3: Elektromagnetanordnung
- 4: bestrombare Wicklung
- 5: Wälzlager
- 6: freies Ende
- 7: Anker(scheibe)
- 8: Rückstellfeder
- 9: Abtrieb
- 10: Wälzlager
- 11: Polflächenteil
- 12: Gehäuse
- 13: Arbeitsraum
- 14: Kupplung
- 15: Mutter
- 16: Fluid, insbesondere Silikonöl
- 17: Elastomerdichtung
- 18: nicht ferritische Dichtscheibe
- 19: Reibfläche
- 20: Reibfläche
- 21: Scherspalt
- 22: magnetischer Fluss
- 23: radial inneres Polstück
- 24: radial äußeres Polstück
- 25: Reibfläche
- 26: Trennabschnitt
- 27: radial innerer Abschnitt
- 28: radial äußerer Abschnitt
- 29: Scherspalt
- 30: Reibfläche
- 31: Mittel zur Einstellung des Fluidfüllstandes
- 32: Konstant-Scherspalt
- 33: Fluidventil
- 34: Ventilöffnung
- 35: Fluidreservoir
- 36: Bimetallmechanismus
- 37: Bimetallfederspirale
- 38: Ventilarm
- 39: Endabschnitt
- 40: Rücklaufschikane
- 41: Bauteil
- 42: Verlängerungsteil
- 43: Achse
- 44: Radialwellendichtung
- 46: Elektromagnetanordnung
- 47: beispielhaft als Klappanker ausgebildeter Ventilanker
- 48: magnetischer Fluss
- 49: Magnetleitmittel
- 50: Arbeitsspalt des Fluidventil (Steuerventils)
- 51: Arbeitsspalt der Reibscheibenkupplungsmittel
- 52: Scherspalt
- 53: Scheibe

## Patentansprüche

1. Kupplungsanordnung zum Übertragen eines Antriebsmomentes von einer Antriebswelle (2) auf ein Nebenaggregat, insbesondere auf ein Lüfterrad, eines Kraftfahrzeuges, umfassend eine Antriebswelle (2), einen, mindestens eine Reibfläche (20, 30) umfassenden Abtrieb (9), einen relativ zum Abtrieb (9) durch Bestromen einer bestrombaren Wicklung (4) verstellbaren Anker (7) mit Reibfläche (19, 25) umfassende Reibscheibenkupplungsmittel sowie mindestens einen mit einem Fluid (16) gefüllten Scherspalt (21, 29, 52) umfassende Flüssigkeitsreibungskupplungsmittel, wobei die Reibscheibenkupplungsmittel und die Flüssigkeitsreibungskupplungsmittel Teil einer gemeinsamen, als kombinierte Reibscheiben- und Flüssigkeitsreibungskupplung ausgebildeten Kupplung (14) sind, bei welcher der verstellbare Anker (7) den Scherspalt (21, 29, 52) begrenzt,
**dadurch gekennzeichnet**,
dass zusätzlich zu dem von dem verstellbaren Anker (7) begrenzten Scherspalt (21, 29, 52) ein nicht von dem Anker (7) begrenzter Konstant-Scherspalt (32) vorgesehen ist.

2. Kupplungsanordnung nach Anspruch 1,
**dadurch gekennzeichnet**,
dass der mindestens eine Scherspalt (21, 29, 52) bei nicht an dem Abtrieb (9) anliegendem Anker (7) zwischen dem Anker (7) und dem Abtrieb (9) gebildet ist.

3. Kupplungsanordnung nach Anspruch 2,
**dadurch gekennzeichnet**,
dass der Scherspalt (21, 29) zwischen der Reibfläche (19, 25) des Ankers (7) und der Reibfläche (30, 20) des Abtriebs (9) gebildet ist.

4. Kupplungsanordnung nach einem der Ansprüche 1 bis 3,
**dadurch gekennzeichnet**,
dass die Reibfläche (19, 25) des Ankers (7) und die Reibfläche (20, 30) des Abtriebs (9), zumindest abschnittsweise, winklig zur Radialerstreckung des Ankers (7) verlaufen.

5. Kupplungsanordnung nach einem der vorhergehenden Ansprüche,
**dadurch gekennzeichnet**,
dass mindestens zwei, vorzugsweise radial beabstandete, vorzugsweise, zumindest abschnittsweise, konisch konturierte, bevorzugt vollständig konisch konturierte, Reibscheibenflächenpaare (19, 30; 25, 20) vorgesehen sind.

6. Kupplungsanordnung nach einem der vorhergehenden Ansprüche,
**dadurch gekennzeichnet**,
dass der von dem Anker (7) begrenzte Scherspalt und der Konstant-Scherspalt (32) fluidleitend miteinander verbunden sind und vorzugsweise in einem gemeinsamen Arbeitsraum (13) angeordnet ist.

7. Kupplungsanordnung nach einem der vorhergehenden Ansprüche,
**dadurch gekennzeichnet**,
dass der mindestens eine, vorzugsweise als Spaltlabyrinth ausgebildete Konstant-Scherspalt (32) auf einer von der Reibfläche des Ankers (7) abgewandten Seite und/oder in einem radial benachbart zur Reibfläche des Ankers angeordneten Bereich angeordnet ist.

8. Kupplungsanordnung nach Anspruch 7,
**dadurch gekennzeichnet**,
dass der auf der von der Reibfläche des Ankers (7) abgewandten Seite vorgesehene Konstant-Scherspalt (32) derart ausgelegt ist, dass mit diesem ein größeres maximales Schleppmoment zwischen Anker (7) und Abtrieb (9) übertragbar ist als mit dem mindestens einen Scherspalt zwischen den Reibflächen.

9. Kupplungsanordnung nach den vorhergehenden Ansprüchen,
**dadurch gekennzeichnet**,
dass ein, vorzugsweise als Axialspalt ausgebildeter, Spalt zwischen dem Anker (7) und einem weiteren Kupplungsbauteil, insbesondere einem Gehäuseteil oder einem Konstant-Scherspalt (32), auf einer von der Reibfläche (19, 25) des Abtriebs (9) abgewandten Seite, eine kleinere Flächenerstreckung aufweist als sämtliche Scherspalte (21, 29) und/oder im nicht bestromten Zustand der Wicklung (4) eine größere mittlere Spaltbreite aufweist als der mindestens eine Scherspalt (21, 29).

10. Kupplungsanordnung nach einem der vorhergehenden Ansprüche,
**dadurch gekennzeichnet**,
dass die Reibfläche (19, 25) des Ankers (7) und/oder die Reibfläche (20, 30) des Abtriebs (9) zum Erhöhen einer Haftreibung von einer, insbesondere organischen, Beschichtung gebildet sind/ist.

11. Kupplungsanordnung nach einem der vorhergehenden Ansprüche,
**dadurch gekennzeichnet**,
dass ein den Anker (7) aufnehmender, fluidgefüllter Arbeitsraum (13) über mindestens eine Elastomerdichtung (17) gegenüber der Umgebung abgedichtet ist.

12. Kupplungsanordnung nach einem der vorhergehenden Ansprüche,
**dadurch gekennzeichnet**,
dass Mittel zum Einstellen und Halten unterschiedlicher Scherspaltbreiten vorgesehen sind.

13. Kupplungsanordnung nach einem der vorhergehenden Ansprüche,
**dadurch gekennzeichnet**,
dass der bestrombaren Wicklung (4) Steuermittel zum Bestromen der Wicklung (4) mit einem modulierten Strom, insbesondere einem PWM-Strom, ausgebildet ist.

14. Kupplungsanordnung nach einem der vorhergehenden Ansprüche,
**dadurch gekennzeichnet**,
dass Mittel zur Einstellung des Fluidfüllstandes im Scherspalt (21, 29) und/oder im Konstant-Scherspalt (32) vorgesehen sind.

15. Kupplungsanordnung nach Anspruch 14,
**dadurch gekennzeichnet**,
dass die Mittel zur Einstellung des Fluidstandes in dem mindestens einen Scherspalt und/oder in dem mindestens einen Konstant-Scherspalt (32) ein Fluidventil (33) umfassen, mit dem der Fluidfluss aus einem Fluidreservoir (35) in dem mindestens einen Scherspalt (21, 29) und/oder dem mindestens einen Konstant-Scherspalt (32) oder aus dem mindestens einen Scherspalt (21, 29) und/oder aus dem mindestens einem Konstant-Scherspalt (32) in das Fluidreservoir beeinflussbar ist.

16. Kupplungsanordnung nach Anspruch 15,
**dadurch gekennzeichnet**,
dass das Fluidventil (33) über einen Bimetallmechanismus oder über, vorzugsweise die bestrombare Wicklung (4) der Reibungskupplungsmittel umfassende Elektromagnetmittel betätigbar ist.

## Claims

1. A coupling assembly for transferring a drive torque from a drive shaft (2) to a secondary unit, in particular to a fan wheel, of a motor vehicle, comprising a drive shaft (2), an output (9) comprising at least one friction surface (20, 30), an armature (7) that is adjustable relative to the output (9) by energizing an energizable winding (4), said armature having a friction disc coupling means comprising a friction surface (19, 25), and at least one liquid friction coupling means comprising a shear gap (21, 29, 52) filled with a fluid (16), wherein the friction disc coupling means and the liquid friction coupling means are part of a common coupling (14) designed as a combined friction disc/liquid friction coupling, wherein the adjustable armature (7) delimits the shear gap (21, 29, 52),
**characterized in that**
in addition to the shear gap (21, 29, 52) delimited by the adjustable armature (7), a constant shear gap (32) is provided which is not delimited by the armature (7).

2. The coupling assembly according to Claim 1,
**characterized in that**
the at least one shear gap (21, 29, 52), with the armature (7) not applied to the output (9), is formed between the armature (7) and the output (9).

3. The coupling arrangement according to Claim 2,
**characterized in that**
the shear gap (21, 29) is formed between the friction surface (19, 25) of the armature (7) and the friction surface (30, 20) of the output (9).

4. The coupling assembly according to one of Claims 1 to 3,
**characterized in that**
the friction surface (19, 25) of the armature (7) and the friction surface (20, 30) of the output (9) run, at least in sections, at an angle to the radial extent of the armature (7).

5. The coupling assembly according to one of the preceding claims,
**characterized in that**
at least two, preferably radially spaced apart, preferably conically contoured at least in sections, preferably completely conically contoured, pairs of friction disc surfaces (19, 30; 25, 20) are provided.

6. The coupling assembly according to one of the preceding claims,
**characterized in that**
the shear gap delimited by the armature (7) and the constant shear gap (32) are connected with one another in a fluid-conducting manner and are preferably arranged in a common working space (13).

7. The coupling assembly according to one of the preceding claims,
**characterized in that**
the at least one constant shear gap (32), preferably configured as a gap labyrinth, is arranged on a side facing away from the friction surface of the armature (7) and/or in a region arranged radially adjacent to the friction surface of the armature.

8. The coupling assembly according to Claim 7,
**characterized in that**
the constant shear gap (32) provided on the side facing away from the friction surface of the armature (7) is designed such that with it a greater maximum drag torque is able to be transmitted between armature (7) and output (9) than with the at least one shear gap between the friction surfaces.

9. The coupling assembly according to the preceding claims,
**characterized in that**
a gap, preferably configured as an axial gap, between the armature (7) and a further coupling component, in particular a housing part or a constant shear gap (32), on a side facing away from the friction surface (19, 25) of the output (9), has a smaller area extent than all the shear gaps (21, 29) and/or in the non-energized state of the winding (4) has a greater mean gap width than the at least one shear gap (21, 29).

10. The coupling assembly according to one of the preceding claims,
**characterized in that**
the friction surface (19, 25) of the armature (7) and/or the friction surface (20, 30) of the output (9) is/are formed for increasing a static friction of an in particular organic coating.

11. The coupling assembly according to one of the preceding claims,
**characterized in that**
a fluid-filled working space (13), receiving the armature (7), is sealed with respect to the environment by means of at least one elastomer seal (17).

12. The coupling assembly according to one of the preceding claims,
**characterized in that**
means are provided for adjusting and keeping different shear gap widths.

13. The coupling assembly according to one of the preceding claims,
**characterized in that**
control means to energize the winding (4) with a modulated current, in particular a PWM current, are designed for the energizable winding (4).

14. The coupling assembly according to one of the preceding claims,
**characterized in that**
means are provided for adjusting the fluid filling level in the shear gap (21, 29) and/or in the constant shear gap (32).

15. The coupling assembly according to Claim 14,
**characterized in that**
the means for adjusting the fluid level in the at least one shear gap and/or in the at least one constant shear gap (32) comprise a fluid valve (33), by which the fluid flow from a fluid reservoir (35) in the at least one shear gap (21, 29) and/or in the at least one constant shear gap (32) or from the at least one shear gap (21, 29) and/or from the at least one constant shear gap (32) into the fluid reservoir is able be influenced.

16. The coupling arrangement according to Claim 15,
**characterized in that**
the fluid valve (33) is able to be actuated via a bimetal mechanism or via electromagnetic means, preferably comprising the energizable winding (4) of the friction coupling means.

## Revendications

1. Ensemble d'embrayage pour transmettre un couple d'entraînement d'un arbre d'entraînement (2) à un organe auxiliaire, en particulier à une roue de ventilateur, d'un véhicule automobile, comportant un arbre d'entraînement (2), une sortie (9) comportant au moins une surface de friction (20, 30), un moyen d'accouplement à disque de friction comportant une armature (7) pouvant être déplacée par rapport à la sortie (9) par alimentation en courant électrique d'un enroulement (4) pouvant être alimenté en courant électrique, laquelle armature est pourvue d'une surface de friction (19, 25), ainsi qu'au moins un moyen d'accouplement à frottement visqueux comportant au moins une fente de cisaillement (21, 29, 52) remplie d'un fluide (16), le moyen d'accouplement à disque de friction et le moyen d'accouplement à frottement visqueux faisant partie d'un embrayage (14) commun réalisé sous forme d'embrayage à disque de friction et à frottement visqueux combiné, dans lequel l'armature déplaçable (7) limite la fente de cisaillement (21, 29, 52), **caractérisé en ce qu'**il est prévu, en plus de la fente de cisaillement (21, 29, 52) limitée par l'armature déplaçable (7), une fente de cisaillement constante (32) non limitée par l'armature (7).

2. Ensemble d'embrayage selon la revendication 1, **caractérisé en ce que** l'au moins une fente de cisaillement (21, 29, 52) est formée entre l'armature (7) et la sortie (9) lorsque l'armature (7) ne s'applique pas contre la sortie (9).

3. Ensemble d'embrayage selon la revendication 2, **caractérisé en ce que** la fente de cisaillement (21, 29) est formée entre la surface de friction (19, 25) de l'armature (7) et la surface de friction (30, 20) de la sortie (9).

4. Ensemble d'embrayage selon l'une quelconque des revendications 1 à 3, **caractérisé en ce que** la surface de friction (19, 25) de l'armature (7) et la surface de friction (20, 30) de la sortie (9) s'étendent au moins en partie de manière angulaire par rapport à l'étendue radiale de l'armature (7).

5. Ensemble d'embrayage selon l'une quelconque des revendications précédentes, **caractérisé en ce qu'**au moins deux paires de surfaces de disque de friction (19, 30 ; 25, 20), de préférence espacées radialement, de préférence de contour au moins en partie conique, de préférence de contour entièrement conique, sont prévues.

6. Ensemble d'embrayage selon l'une quelconque des revendications précédentes, **caractérisé en ce que** la fente de cisaillement limitée par l'armature (7) et la fente de cisaillement constante (32) sont en liaison fluidique l'une avec l'autre et sont disposées de préférence dans un espace de travail commun (13).

7. Ensemble d'embrayage selon l'une quelconque des revendications précédentes, **caractérisé en ce que** l'au moins une fente de cisaillement constante (32) réalisée de préférence sous forme de labyrinthe à fente est disposée sur un côté opposé à la surface de friction de l'armature (7) et/ou dans une région disposée de manière radialement adjacente à la surface de friction de l'armature.

8. Ensemble d'embrayage selon la revendication 7, **caractérisé en ce que** la fente de cisaillement constante (32) prévue sur le côté opposé à la surface de friction de l'armature (7) est dimensionnée de telle sorte qu'à l'aide de celle-ci un plus grand couple d'entraînement maximal puisse être transmis entre l'armature (7) et la sortie (9) qu'à l'aide de l'au moins une fente de cisaillement entre les surfaces de friction.

9. Ensemble d'embrayage selon les revendications précédentes, **caractérisé en ce qu'**une fente, réalisée de préférence sous forme de fente axiale, entre l'armature (7) et un composant d'embrayage supplémentaire, en particulier une partie de boîtier ou une fente de cisaillement constante (32), présente une plus petite étendue superficielle sur un côté opposé à la surface de friction (19, 25) de la sortie (9) que toutes les fentes de cisaillement (21, 29) et/ou présente, à l'état non alimenté en courant électrique de l'enroulement (4), une largeur moyenne de fente plus grande que l'au moins une fente de cisaillement (21, 29).

10. Ensemble d'embrayage selon l'une quelconque des revendications précédentes, **caractérisé en ce que** la surface de friction (19, 25) de l'armature (7) et/ou la surface de friction (20, 30) de la sortie (9) est/sont formée(s) pour augmenter un frottement par adhérence d'un revêtement en particulier organique.

11. Ensemble d'embrayage selon l'une quelconque des revendications précédentes, **caractérisé en ce qu'**un espace de travail (13) rempli de fluide et recevant l'armature (7) est étanchéifié vis-à-vis de l'environnement par le biais d'au moins un joint d'étanchéité en élastomère (17).

12. Ensemble d'embrayage selon l'une quelconque des revendications précédentes, **caractérisé en ce que** des moyens sont prévus pour régler et maintenir différentes largeurs de fente de cisaillement.

13. Ensemble d'embrayage selon l'une quelconque des revendications précédentes, **caractérisé en ce que** des moyens de commande pour alimenter en courant électrique l'enroulement (4) avec un courant modulé, en particulier un courant PWM (à modulation de largeur d'impulsions), sont associés à l'enroulement (4) pouvant être alimenté en courant électrique.

14. Ensemble d'embrayage selon l'une quelconque des revendications précédentes, **caractérisé en ce que** des moyens de réglage du niveau de remplissage de fluide dans la fente de cisaillement (21, 29) et/ou dans la fente de cisaillement constante (32) sont prévus.

15. Ensemble d'embrayage selon la revendication 14, **caractérisé en ce que** les moyens de réglage du niveau de fluide dans l'au moins une fente de cisaillement et/ou dans l'au moins une fente de cisaillement constante (32) comportent une soupape de fluide (33), à l'aide de laquelle l'écoulement de fluide à partir d'un réservoir de fluide (35) dans l'au moins une fente de cisaillement (21, 29) et/ou dans l'au moins une fente de cisaillement constante (32) ou à partir de l'au moins une fente de cisaillement (21, 29) et/ou à partir de l'au moins une fente de cisaillement constante (32) dans le réservoir de fluide peut être influencé.

16. Ensemble d'embrayage selon la revendication 15, **caractérisé en ce que** la soupape de fluide (33) peut être actionnée par le biais d'un mécanisme bimétallique ou par le biais de moyens à électroaimants comportant de préférence l'enroulement (4) pouvant être alimenté en courant électrique des moyens d'accouplement à friction.
